# FASCICULE DE BREVET EUROPEEN

(11) **EP 3 074 246 B1**
(45) Date de publication et mention de la délivrance du brevet: **09.05.2018**
(21) Numéro de dépôt: 14803113.1
(22) Date de dépôt: 26.11.2014
(51) Int. Cl.: B60C 13/02

(54) **PNEUMATIQUE COMPORTANT UN MOTIF DE MASQUAGE DE DEFAUT SUR UN FLANC**
REIFEN MIT EINEM DEFEKTMASKIERENDEN MUSTER AUF EINER SEITENWAND
TYRE COMPRISING A DEFECT-MASKING PATTERN ON A SIDEWALL

(30) Priorité: 29.11.2013 FR 1361865
(43) Date de publication de la demande: 05.10.2016
(73) Titulaire: Compagnie Générale des Etablissements Michelin, 63000 Clermont-Ferrand (FR)
(72) Inventeur: MUHLHOFF, Olivier, F-63040 Clermont-Ferrand Cedex 9 (FR)
(74) Mandataire: Demaure, Pierre-Yves
(86) Numéro de dépôt international: PCT/EP2014/075598
(87) Numéro de publication internationale: WO 2015/078882

(56) Documents cités:
- WO-A1-2012/066717
- FR-A1- 2 412 426
- US-A- 5 027 876

## Description

### DOMAINE DE L'INVENTION

La présente invention concerne un pneumatique en matériau caoutchoutique pour véhicule automobile comprenant un flanc et un motif formé sur ce flanc.

### ETAT DE LA TECHNIQUE

Un pneumatique comporte de manière connue une carcasse interne, une bande de roulement, un bourrelet d'accrochage à une jante, un flanc, et un élément intérieur d'étanchéité. La carcasse interne est composée d'au moins une nappe carcasse de fils enrobés de caoutchouc. Lors d'une étape de fabrication du pneumatique, cette nappe carcasse est coupée puis assemblée sur un tambour. Cette nappe pouvant faire plusieurs fois le tour de ce tambour, il existe ainsi une pluralité de couches formées à partir d'une même nappe carcasse. Or, il est possible qu'au cours de la mise en place de la nappe, la fin de cette nappe ne coïncide pas exactement avec le début de cette nappe sur le tambour, de sorte qu'il existe un surplus de nappe dans l'assemblage. Cette superposition crée localement une surépaisseur sur l'ébauche crue du pneumatique. Une fois cette ébauche crue vulcanisée et le pneumatique en résultant gonflé, cette surépaisseur apparaît en creux au niveau du flanc du pneumatique. Or ce creux est particulièrement visible sur le pneumatique, notamment sous certaines conditions d'éclairage, ce qui peut constituer un motif de non achat par un consommateur alors même que ce défaut n'est pas préjudiciable à la sécurité. Afin de masquer ce défaut sur le flanc du pneumatique, selon un état de la technique antérieur décrit dans le brevet US6, 439,287, il est proposé de former un motif moiré sur l'ensemble du flanc du pneumatique et notamment dans la région où se trouve la déformation vallonnement/creux créée par le chevauchement des extrémités de ou des nappes carcasses. Plusieurs motifs moirés sont décrits. Ces motifs moirés constituent des motifs d'interférence comportant notamment des stries. Ainsi, ces motifs moirés créent des interférences lorsque la lumière est réfléchie par le flanc du pneumatique. Les différences de réflexion de la lumière qui existaient entre la zone de vallonnement/creux et le reste de la surface du flanc, ne sont ainsi plus visibles à l'oeil nu.

Un problème de cet état de la technique est que le procédé de fabrication de ces motifs moirés est complexe et coûteux à mettre en oeuvre. Un autre problème est que ce motif n'apporte pas une esthétique satisfaisante vis-à-vis du consommateur.

Un autre document WO2012/066717 décrit un pneumatique en matériau caoutchoutique comprenant un flanc et un motif formé dans ce flanc. Le motif comprend une pluralité d'éléments en creux, chaque élément en creux ayant la forme d'une partie de sphère.

Dans ce contexte, la présente invention vise à masquer ce défaut de déformation flanc d'une manière plus simple, et ceci pour une grande majorité d'angle d'observation d'un consommateur.

### DEFINITIONS

Par « pneumatique », on entend tous les types de bandages élastiques soumis à une pression interne ou non.

Par « bande de roulement » d'un pneumatique, on entend une quantité de matériau caoutchoutique délimitée par des surfaces latérales et par deux surfaces principales, l'une intérieure, et l'autre extérieure, ladite surface extérieure étant destinée à entrer en contact avec une chaussée lorsque le pneumatique roule.

Par « bourrelet » d'un pneumatique, on entend une partie du pneumatique destinée à prendre assise sur une jante de roue.

Par « flanc » d'un pneumatique, on entend une surface latérale du pneumatique disposée entre la bande de roulement du pneumatique et un bourrelet de ce pneumatique.

Par « motif formé sur un flanc», on entend une partie de flanc présentant des caractéristiques d'état de surface homogène différentes du reste du flanc. Ce motif peut délivrer des informations techniques et légales, et d'autre part permettre aux consommateurs de distinguer l'origine du produit.

Par « surface moyenne de flanc », on entend le prolongement de la surface du flanc au dessus du motif formé sur le flanc.

### RESUME DE L'INVENTION

A cette fin, l'invention propose un pneumatique en matériau caoutchoutique comprenant un flanc et un motif formé dans ce flanc. Ce flanc s'étend selon une surface moyenne. Le motif comprend une pluralité d'éléments en creux, ces éléments en creux ayant la forme d'une partie de sphère. Ces éléments en creux se raccordent entre eux au niveau de zones de raccordement, ces zones de raccordement s'étendant au-dessous de la surface moyenne du flanc. Vue en coupe, tout ou partie des éléments en creux comporte une ouverture angulaire inférieure ou égale à 70°.

Ainsi, comme on va le voir par la suite, l'architecture du motif permet d'éviter une trop grande absorption de la lumière par la texture du flanc du pneumatique. Les rayons lumineux provenant d'une même source lumineuse qui éclairent le flanc du pneumatique sont ainsi sensiblement déviés de la même manière sur le motif, aussi bien au niveau du motif recouvrant la partie déformée du flanc qu'au niveau du motif recouvrant le flanc où il n'y a pas de déformation.

En outre, comme les zones de raccordement sont en-dessous de la surface moyenne du flanc, celles-ci sont mieux protégées contre des phénomènes de frottements, issus par exemple de râpages trottoirs. Ceci est notamment vrai lorsque les motifs sont de petites tailles, les efforts de frottement étant alors absorbés par les bords de flanc entourant le motif.

Enfin, l'ouverture angulaire choisie permet d'obtenir une meilleure surface de réflexion pour la lumière. Le motif apparaît ainsi plus clairement sur le flanc du pneumatique.

Selon des modes de réalisation non limitatifs, le pneumatique, peut comporter en outre une ou plusieurs caractéristiques supplémentaires parmi les suivantes :

La densité d'éléments en creux dans le motif est supérieure ou égale à 0,2 éléments en creux par mm². Cela permet de donner au motif un aspect plus uniforme vis-à-vis d'un observateur.

Vue en coupe, tout ou partie des éléments en creux comporte une ouverture angulaire inférieure ou égale à 70°. Cela permet d'obtenir une meilleure surface de réflexion pour la lumière. Le motif apparaît ainsi plus clairement sur le flanc du pneumatique.

Les éléments en creux sont alignés les uns par rapport aux autres dans le motif. Les limites du motif sont ainsi mieux maîtrisées.

Tout ou partie des éléments en creux comporte une rugosité de surface de paramètre Ra inférieur à 30 µm. Cela permet d'obtenir une surface proche d'une surface polie et ainsi de limiter la dispersion de la lumière.

Les éléments en creux présentent un rayon R et ces éléments en creux se raccordent entre eux au niveau de zones de raccordement, ces zones de raccordement étant courbes et présentant un rayon de raccordement r, tel que r≤R/3.

### BREVE DESCRIPTION DES DESSINS

D'autres caractéristiques et avantages de l'invention ressortiront de la description suivante, donnée à titre d'exemple, sans caractère limitatif, en regard des dessins annexés sur lesquels :
- la **figure 1** représente schématiquement un flanc d'un pneumatique, ledit flanc comportant un motif faisant contraste par rapport à ce flanc ;
- la **figure 2** est une représentation en perspective d'une pluralité d'éléments en creux constituant le motif de la **figure 1** ;
- la **figure 3** représente une vue en perspective d'un élément en creux du motif de la **figure 1** ;
- la **figure 4** représente une vue de profil d'un élément en creux du motif de la **figure 1** ;
- la **figure 5** représente schématiquement une vue en coupe d'une partie des éléments en creux de la **figure 1** ;
- la **figure 6** représente schématiquement une vue en coupe d'une variante de réalisation du motif de la **figure 1** ;
- la **figure 7** représente schématiquement une variante de réalisation du motif de la **figure 1****.**

Dans la description qui va suivre, des éléments sensiblement identiques ou similaires seront désignés par des références identiques.

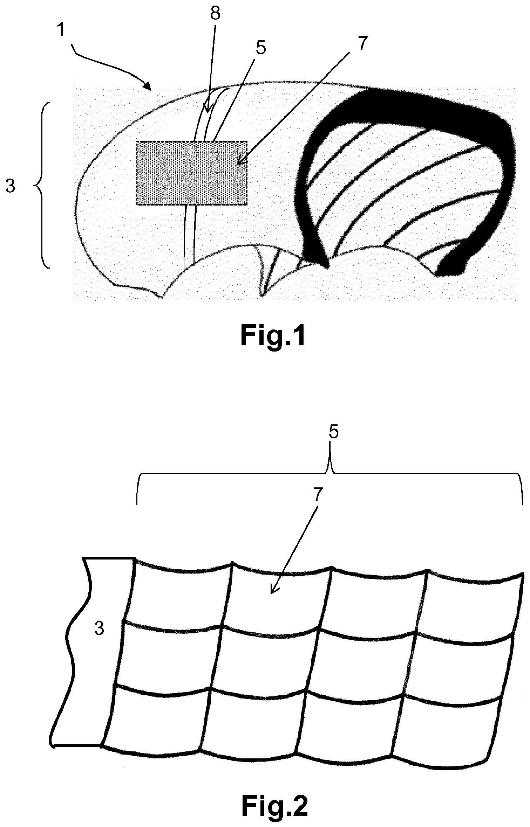

La **figure 1** illustre le flanc 3 du pneumatique 1, ledit flanc 3 comprenant un motif 5. Sur la **figure 1** est représenté un échantillon du motif 5 qui recouvre la déformation flanc 8.
Le motif 5 comprend une pluralité d'éléments en creux 7, également appelés éléments concaves 7. Le motif 5 s'étend sur tout ou partie de la surface du flanc 3 et en particulier sur la partie comprenant la déformation flanc 8 créé par le chevauchement de nappe carcasse du pneumatique 1. Le motif 5 recouvre ainsi tout le vallonnement/creux 8. Lorsque le motif 5 s'étend sur toute la surface circonférentielle du flanc 3, un observateur du pneumatique verra peu de différence visuelle entre le motif 5 et le flanc 3.

La **figure 2** montre une vue agrandie en perspective d'une partie du motif 5 de la **figure 1****.** Comme on peut le voir sur la **figure 2****,** les éléments en creux 7 ont tous la même forme et le motif 5 comporte une répétition de cette même forme. La forme est une surface ouverte. Dans un mode de réalisation non limitatif illustré à la **figure 2****,** les éléments en creux 7 sont alignés les uns par rapport aux autres dans le motif 5. Ceci permet de bien délimiter le motif 5.
Chaque élément en creux 7 a la propriété particulière de renvoyer une quantité de lumière qui reste constante, même lorsque le motif est incliné d'un faible angle par rapport à une position d'origine correspondant dans l'exemple à la position sur le flanc sans déformation. Dans un exemple non limitatif, l'inclinaison de l'angle est inférieure à 5°, ce qui correspond à l'inclinaison du renfoncement créé par la déformation flanc par rapport à la surface du flanc sans déformation.

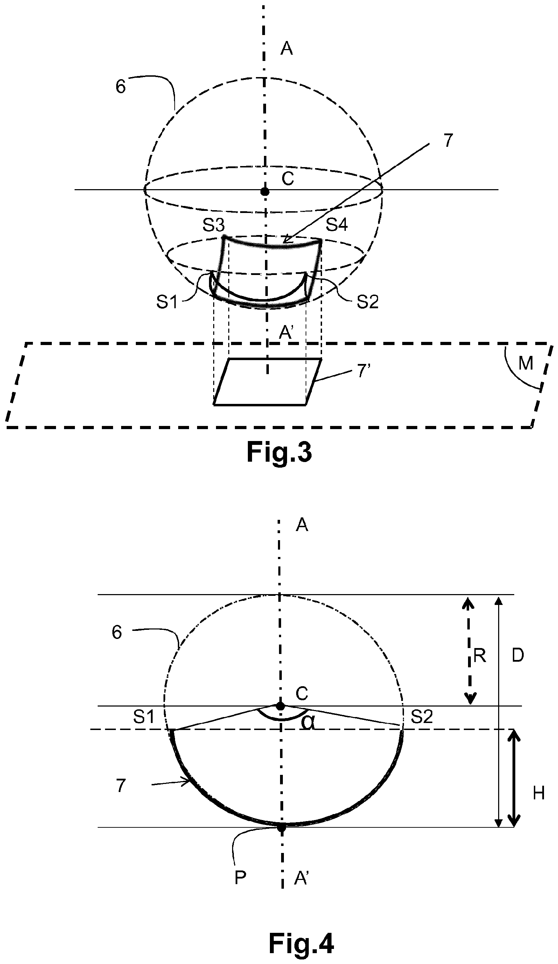

La vue en perspective **figure 3** et la vue en coupe **figure 4****,** illustrent la forme géométrique des éléments en creux 7. Comme illustré sur la vue en perspective de la **figure 3****,** un élément en creux 7 épouse la forme d'une partie de sphère 6 dont la projection sur un plan M selon un axe de symétrie AA' de la sphère 6 est un carré 7', l'axe de symétrie AA' passant par le centre C de la sphère. De plus, un élément en creux comprend quatre sommets S1, S2, S3, S4.
En outre, comme illustré sur la vue de profil de la **figure 4****,** un élément en creux 7 présente un point P équidistant des quatre sommets S1 à S4 et une profondeur H. Le centre C de l'élément en creux 7 est le centre de la sphère 6 sur lequel il s'appuie, cette dernière présentant un rayon R et un diamètre D.

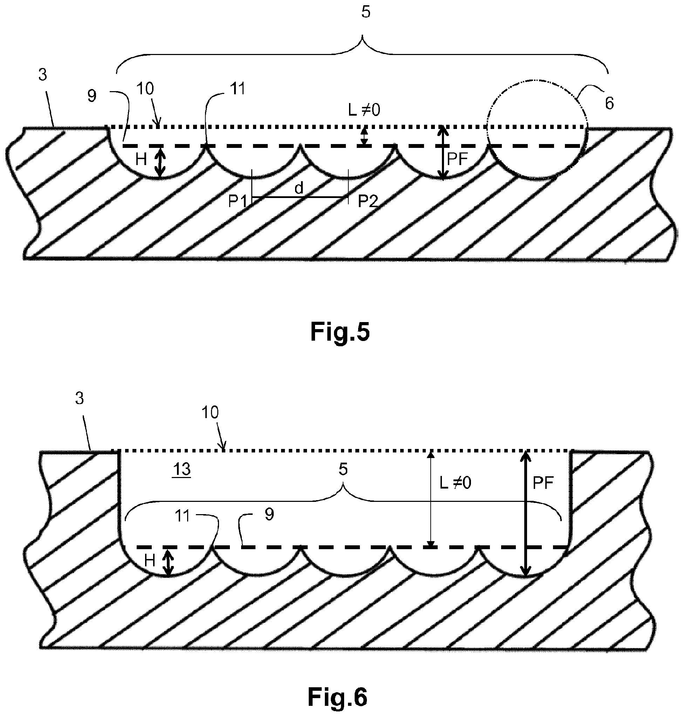

Dans le motif 5, chaque élément en creux 7 est adjacent avec un autre élément en creux 7. Ainsi, comme illustré sur la **figure 5****,** la distance d (appelée également « pas ») entre le point équidistant P1 d'un élément en creux et le point équidistant P2 d'un autre élément en creux adjacent est inférieure au diamètre D de la sphère 6 sur lequel l'élément en creux s'appuie. Dans un mode de réalisation non limitatif, le pas d entre deux points équidistants adjacents P1-P2 de deux éléments en creux adjacents 7 est supérieur ou égal à 0,3mm et inférieur à 2mm. Ainsi, l'oeil humain, à une distance supérieure à 2 mètres ne va percevoir qu'une texture du motif de couleur uniforme. Dans un exemple de réalisation non limitatif, le pas d entre deux sommets adjacents P1-P2 est égal à 1mm. Cela facilite la mise en oeuvre au niveau industriel des éléments en creux 7 et permet d'utiliser un outillage peu coûteux. Ainsi, un motif 5 comportant de tels éléments en creux 7 est plus robuste qu'un motif à rainures, lesdites rainures présentant une plus importante faiblesse notamment lors de râpage trottoir.
Comme on peut le voir sur la **figure 5****,** les sommets S de la pluralité des éléments en creux 7 forment des zones de raccordement 11. Ces zones de raccordement sont situées en dessous de la surface moyenne 10 du flanc 3. L'ensemble des sommets des éléments en creux adjacents 7 sont situés sur une surface 9 qui est en retrait par rapport à la surface moyenne 10. Ainsi, il existe une distance L non nulle entre la surface 9 des sommets et la surface moyenne 10.
Autrement dit, les éléments en creux 7 présentent une profondeur H inférieure à une distance PF entre le point P de l'élément en creux 7 et la surface moyenne 10 du flanc 3, la distance PF étant prise selon l'axe AA' de l'élément en creux 7. La profondeur H d'un élément en creux 7 est sensiblement égale à la profondeur H de chacun des éléments en creux adjacents 7. Dans ce mode de réalisation non limitatif illustré à la **figure 5****,** la profondeur H est supérieure à la distance L.
Ainsi, le fait que les sommets S1 à S4 ne remontent pas jusqu'au niveau de la surface du flanc 3 permet d'avoir un motif 5 plus robuste notamment lors de râpage trottoir. Dans le cas contraire, à savoir si la distance L était nulle, il y aurait une faiblesse au niveau desdits sommets S qui pourraient en effet être abîmés par le râpage trottoir.
Par ailleurs, comme les éléments en creux 7 se situent sous la surface moyenne 10 du flanc 3, cela perturbe moins l'écoulement de l'air qui est ainsi plus fluide et qui suit donc mieux ladite surface moyenne 10 du flanc 3.
Dans un mode de réalisation non limitatif, vue en coupe (coupe droite **figure 4**), chaque élément en creux 7 comporte une ouverture angulaire α inférieure ou égale à 70°. Par ouverture angulaire a, on entend, vue en coupe, l'angle formé par deux segments passant par les zones de raccordement 11 et se rejoignant au centre C de l'élément en creux 7.
Cela évite une absorption de lumière importante. Les rayons lumineux incidents sur le motif 5 et donc sur les éléments en creux 7, sont réfléchis vers l'observateur. Avec ce motif 5, la lumière est peu absorbée par la texture du flanc du pneumatique. Il n'y a donc pas de zone dite « noire ». La lumière est réfléchie de la même manière (même angle de réflexion) sur le motif 5 recouvrant le défaut vallonnement/creux 8 que sur le motif 5 recouvrant la partie du flanc 3 ne comportant aucun défaut. Ainsi, l'effet visuel créé par le vallonnement/creux 8 n'est pratiquement plus visible voire plus du tout, quelque soit la position de l'observateur par rapport au flanc du pneumatique. L'ensemble du motif 5 permet de créer une zone dite « blanche » en raison de la réflexion optimisée de la lumière sur ce motif 5.

Afin d'augmenter la réflexion de la lumière, les éléments en creux 7 présentent une texture qui se rapproche d'une surface lisse, réfléchissante, qui ne disperse pas la lumière ni ne réduit l'intensité lumineuse renvoyée. Ainsi, le paramètre écart-moyen arithmétique Ra représentatif de la rugosité de surface est très faible et est inférieur à 30µm. La quantité de lumière renvoyée est maximisée. Quel que soit la position de l'observateur et donc de l'oeil par rapport au pneumatique 1, et quel que soit la source lumineuse qui éclaire le flanc 3 du pneumatique, le motif 5 permet de masquer l'effet visuel créé par le défaut dû au chevauchement de nappe carcasse, à savoir la déformation flanc.

Afin d'obtenir un procédé de fabrication facile à mettre en oeuvre, dans un mode de réalisation non limitatif, la densité d'éléments en creux 7 dans le motif 5 est supérieure ou égale à 0,2 éléments par mm². Ainsi, un exemple simple de procédé de fabrication d'un moule correspondant au négatif du motif 5 est d'effectuer un usinage par moletage du moule.

La **figure 6** présente une variante de réalisation dans laquelle le pneumatique comporte un logement 13 dans le flanc 3. Le motif 5 est ainsi disposé dans ce logement 13 de sorte qu'on améliore nettement la protection de ce motif contre l'usure provoquée, par exemple, par des râpages avec les trottoirs. On est sûr que les éléments en creux 7 seront mieux protégés. Les éléments en creux 7 sont au fond du logement 13. Dans cette variante de réalisation non limitative, la profondeur H est inférieure à la distance L.

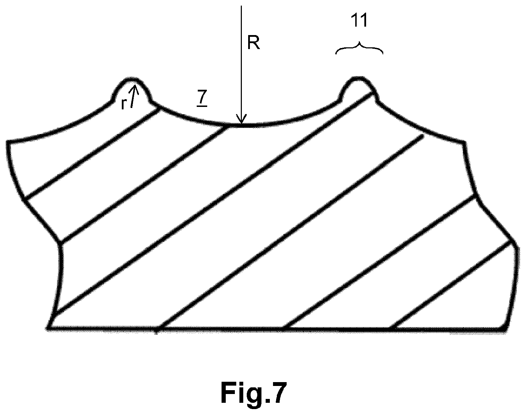

La **figure 7** présente une autre variante de réalisation dans laquelle les éléments en creux se raccordent entre eux au niveau de zones de raccordement 11, ces zones de raccordement 11 étant courbes et présentant un rayon de raccordement r, tel que r≤R/3.

L'invention n'est pas limitée aux exemples décrits et représentés et diverses modifications peuvent y être apportées sans sortir de son cadre.

Ainsi, dans un mode de réalisation non limitatif, les éléments en creux sont moulés par une partie d'un moule, cette partie de moule ayant préalablement subie une opération de moletage pour le moulage des éléments en creux.

Dans un autre mode de réalisation non limitatif, le motif 5 comprend des éléments en creux 7 non alignés.

L'invention décrite présente notamment les avantages suivants :
- avec la texture proposée du motif, la quantité de lumière renvoyée varie très peu, même avec une variation locale d'angle de la surface du pneu créée par le renfoncement de la déformation. Ainsi, la régularité de la quantité de lumière provenant d'une source lumineuse, renvoyée vers un observateur par un élément en gomme, est améliorée. Et l'observateur perçoit ainsi une surface de couleur uniforme, malgré la variation locale de l'angle de la surface du flanc.
- avec les éléments en creux ainsi structurés, on évite l'absorption de la lumière et ainsi, on évite de créer une zone noire ;
- quelque soit la source lumineuse incidente qui éclaire le pneumatique (par exemple la lumière du soleil ou la lumière d'un magasin), il y a un masquage de la déformation flanc par le motif. La solution proposée ne dépend donc pas de la quantité de lumière réfléchie sur le flanc du pneumatique ;
- un observateur du pneumatique ne distingue pratiquement plus, voire plus du tout la déformation flanc ;
- le motif est plus robuste. Il présente ainsi une pérennité dans le temps ; et
- grâce à l'écoulement de l'air amélioré, on diminue la consommation du véhicule dans le temps.

## Revendications

1. Pneumatique en matériau caoutchoutique comprenant un flanc (3) et un motif (5) formé dans ce flanc (3), ledit flanc s'étendant selon une surface moyenne (10) ledit motif (5) comprenant une pluralité d'éléments en creux (7), chaque élément en creux (7) ayant la forme d'une partie de sphère, lesdits éléments en creux (7) se raccordant entre eux au niveau de zones de raccordement (11) les zones de raccordement (11) s'étendant au-dessous de la surface moyenne (10) du flanc **caractérisé en ce que**, vue en coupe, tout ou partie des éléments en creux (7) comporte une ouverture angulaire (α) inférieure ou égale à 70°, ladite ouverture angulaire (α) correspond à l'angle formé par deux segments passant par les zones de raccordement (11) et se rejoignant au centre C de l'élément en creux (7).

2. Pneumatique selon la revendication 1, **caractérisé en ce que** la densité d'éléments en creux (7) dans le motif (5) est supérieure ou égale à 0,2 éléments par mm².

3. Pneumatique selon l'une des revendications 1 à 2, **caractérisé en ce que** les éléments en creux (7) sont alignés les uns par rapport aux autres dans le motif (5).

4. Pneumatique selon l'une quelconque des revendications 1 à 3, **caractérisé en ce que** tout ou partie des éléments en creux (7) comporte une rugosité de surface de paramètre Ra inférieur à 30 µm.

5. Pneumatique selon l'une quelconque des revendications 1 à 4, le pneumatique comportant un logement (13) dans le flanc (3), **caractérisé en ce que** le motif (5) est disposé dans ledit logement (13).

6. Pneumatique selon l'une quelconque des revendications 1 à 5, les éléments en creux (7) présentant un rayon R, **caractérisé en ce que** les zones de raccordement (11) sont courbes et présentent un rayon de raccordement r, tel que r≤R/3.

## Patentansprüche

1. Reifen aus kautschukartigem Material, aufweisend eine Flanke (3) und ein in dieser Flanke (3) ausgebildetes Muster (5), wobei die Flanke sich entlang einer mittleren Oberfläche (10) erstreckt, wobei das Muster (5) eine Vielzahl von vertieften Elementen (7) aufweist, wobei jedes vertiefte Element (7) die Form eines Kugelabschnitts aufweist, wobei die vertieften Elementen (7) sich im Bereich von Verbindungszonen (11) verbinden, wobei die Verbindungszonen (11) sich unter die mittlere Oberfläche (10) der Flanke erstrecken, **dadurch gekennzeichnet, dass** in der Querschnittansicht alle oder ein Teil der vertieften Elemente (7) eine Winkelöffnung (α) umfasst, welche kleiner oder gleich 70° ist, wobei die Winkelöffnung (α) dem Winkel entspricht, welcher durch zwei Segmente gebildet wird, welche die Verbindungszonen (110 durchlaufen und sich in der Mitte C des vertieften Elements (7) treffen.

2. Reifen nach Anspruch 1, **dadurch gekennzeichnet, dass** die Dichte an vertieften Elementen (7) in dem Muster (5) größer oder gleich 0,2 Elemente pro mm² ist.

3. Reifen nach einem der Ansprüche 1 bis 2, **dadurch gekennzeichnet, dass** die vertieften Elemente (7) in Bezug zueinander in dem Muster (5) ausgerichtet sind.

4. Reifen nach einem der Ansprüche 1 bis 3, **dadurch gekennzeichnet, dass** alle oder ein Teil der vertieften Elemente (7) einen Oberflächenrauheitskennwert Ra von kleiner als 30 µm umfasst.

5. Reifen nach einem der Ansprüche 1 bis 4, wobei der Reifen eine Aufnahme (13) in der Flanke (3) umfasst, **dadurch gekennzeichnet, dass** das Muster (5) in der Aufnahme (13) angeordnet ist.

6. Reifen nach einem der Ansprüche 1 bis 5, wobei die vertieften Elemente (7) einen Radius R aufweisen, **dadurch gekennzeichnet, dass** die Verbindungszonen (11) Kurven sind und einen Verbindungsradius r aufweisen, wie beispielsweise r≤R/3.

## Claims

1. Tyre made of rubbery material comprising a sidewall (3) and a pattern (5) formed in this sidewall (3), the said sidewall extending along a mean surface (10), the said pattern (5) comprising a plurality of recessed elements (7), each recessed element (7) having the form of a part of a sphere, the said recessed elements (7) meeting each other at connection zones (11), the connection zones (11) extending under the mean surface (10) of the sidewall, **characterized in that**, viewed in cross section, all or part of the recessed elements (7) subtend an angle (α) less than or equal to 70°, the said angle (α) corresponds to the angle formed by two segments passing through the connection zones (11) and meeting at the centre C of the recessed element (7).

2. Tyre according to Claim 1, **characterized in that** the density of recessed elements (7) within the pattern (5) is greater than or equal to 0.2 elements per mm².

3. Tyre according to one of Claims 1 to 2, **characterized in that** the recessed elements (7) are aligned with one another within the pattern (5).

4. Tyre according to any one of Claims 1 to 3, **characterized in that** all or part of the recessed elements (7) have a surface roughness parameter Ra less than 30 µm.

5. Tyre according to any one of Claims 1 to 4, the tyre comprising a housing (13) in the sidewall (3), **characterized in that** the pattern (5) is arranged in the said housing (13).

6. Tyre according to any one of Claims 1 to 5, the recessed elements (7) having a radius R, **characterized in that** the connection zones (11) are curved and have a blend radius r such that r≤R/3.
